# EUROPEAN PATENT APPLICATION

(11) **EP 2 177 486 A1**
(43) Date of publication of application: **21.04.2010**
(21) Application number: 09173291.7
(22) Date of filing: 16.10.2009
(51) Int. Cl.: C03C 10/06, C04B 41/89, C03C 8/04

(54) **Glass-ceramic material and tiles coated with it**

(30) Priority: 17.10.2008 IT MI20081848
(71) Applicant: Marazzi Group S.p.A., 41100 Modena MO (IT)
(72) Inventor: Marazzi, Filippo, 41050 Colombaro MO (IT)
(74) Representative: Faraggiana, Vittorio

(57) **Abstract**

The invention regards a method for manufacturing ceramic tiles with rough surface, in which subjected to baking in a kiln is a support made of ceramic material applied on which is a first decorative layer, and a second surface layer composed of precursor glass material made up of SiO₂-Al₂O₃-M₂O-M'O-B₂O₃, wherein M may be selected from among Na, K, Li or a combination of these elements and M' may be selected from among Mg, Ca, Ba, Sr, Zn, Pb or a combination of these elements, during said baking occurring both the sintering of the ceramic mixture and the formation from said precursor glass material of a glass-ceramic material comprising neoformation crystals of which the main constituent is a aluminosilicate of general formula (Sr, Ca, Mg)Al₂Si₂O₈. Furthermore, the invention regards the material for glass-ceramic coating and the tile coated therewith.
The precursor glass has the following composition in wt%: 35-70 SiO₂,10-30 Al₂O₃, ≧ 6 M₂O, ≧ 20 M'O, 0-15 B₂O₃, 0-10 K₂O, 0-10 Na₂O, 0-10 Li₂O, 0-25 SrO, 0-25 CaO, 0-25 MgO, 0-25 BaO, 0-25 ZnO, 0-25 PbO.

## Description

The invention refers to the ceramic tiles production industry and in particular glazed ceramic tiles.

Known are methods for producing ceramic tiles wherein a first layer of colored material representing the decoration is deposited on a ceramic support. Deposited on this first layer may be a second surface finishing layer.

The product thus obtained is subjected to traditional baking and the surface layer acquires a glass-like aspect that may be shiny or brilliant.

The present invention mainly regards the formation of this surface layer, with the aim of obtaining a tile with particular characteristics.

It is possible to use frits which, starting from an amorphous glass phase and following a thermal cycle, after being molten are subjected to surface nucleation phenomena that allow the formation of crystals which coat the surface of the tiles and confer to the surface a non-shiny aspect, commonly referred to as "mat". This crystal growth process within a glass phase is known as devitrification process and the materials thus obtained are defined as glass-ceramic materials.

Generally, in applications providing for the use of glass-ceramic materials, the devitrification heat cycle must be accurately calibrated to obtain the best crystal growth. Most of the times, the devitrification heat cycle is an extremely slow and complex heat cycle.

This is the reason why glass-ceramic materials have found quite limited applications in the ceramic tiles industry. As a matter of fact, application of this type of technology in the ceramic tiles industry implies a series of additional conditions which often require different solutions.

In particular, the main reason why it is difficult to use, in the ceramic tiles industry, glass compositions capable of devitrifying lies in the fact that, in the modern single-baking technology used on the production of tiles, the glaze is subjected to the same heat cycle as the compound, both when heating and cooling. Obtaining a glass compound capable of being mostly transformed into crystalline phase through a heat cycle compatible with that of baking the ceramic tiles is thus already per se quite complex.

Currently available in the market are glazes and frits based on glass-ceramic systems but with low transparency and with millimetric crystallization which allows obtaining a relatively shiny but "stooped" surface, i.e. far from planarity, which makes the surface non-slippery, but difficult to clean.

The most common method for obtaining these products is that of keeping the glass phase separate from the crystalline phase, i.e. introducing into the glaze the crystalline phases, which serve to confer resistance to the surface of the material, in form of previously formed crystalline.

According to an alternative technology, this drawback had been overcome by applying the glass-ceramic material immediately after the heat treatment required for baking the ceramic support, then following it up with a second heat cycle suitable for the devitrification of the glass-ceramic material.

However, this technical solution, implies considerable restrictions for the production process and above all implies energy consumption almost twice higher with respect to the normal single-baking process.

The solution according to the present invention, which aims at providing a glass-ceramic material capable of reaching complete crystallization during the normal heat treatment to which the tiles are subjected, falls within this context.

Due to this characteristic, this glass-ceramic material may be conveniently used to obtain frits for ceramic tiles.

Thus, an object of the present invention is that of providing a process for making glazed tiles capable of allowing overcoming the drawbacks of the solution according to the prior art and attaining the technical results described previously.

A further object of the invention is that said process may be implemented with substantially low costs, both in terms of production costs and management costs.

Therefore a process for obtaining tiles as defined in claim 1 forms a first specific object of the present invention.

A further object of the invention is the tile thus obtained as well as the frit used therein to form the finishing surface layer of the tile.

Further characteristics of the invention are defined in the subsequent dependent claims.

The invention shall be described hereinafter for exemplifying but non-limiting purposes, with particular reference to some embodiments and figures in the attached drawings, wherein:
- figure 1 shows an image - obtained by means of the electron microscope - of the surface of the glass-ceramic material for coating the tile, as obtained according to the invention,
- figure 2 shows an image - obtained by means of the electron microscope - of the surface of the glass-ceramic material of figure 1, less magnified, after lapping,
- figure 3 shows an image - obtained by means of the electron microscope - of the surface of the glass-ceramic material of figure 1, more magnified, after lapping,
- figure 4 shows an image - obtained by means of the electron microscope - of a section of the surface layer of a ceramic tile coated with the glass-ceramic material of figure 1,
- figure 5 shows the EDAX spectrum of the zone of material indicated as Spectrum 2 in figure 4,
- figure 6 shows the X-ray diffraction spectrum obtained on the surface of the glass-ceramic material of figure 1, and
- figure 7 shows a graph of the sintering degree of the glass-ceramic material of the present invention upon variation of the temperature.

For better understanding of the type of glass-ceramic material which - according to the present invention - is intended to form the surface of the tile a more detailed description of the mechanism that leads to the crystal growth starting from a glass phase is required.

The internal structure of the glass is characterized by the fact that the molecular groups are arranged following an order referred to as "mean range", i.e. a few tens of atoms. In some old text books and in common language glass is defined as amorphous, i.e. without a shape or order, but recent studies have shown that the term amorphous is actually inappropriate, and the expression "mean range order" would be more suitable. This type of structure occurs in some specific cases: not all substances may have this kind of structure. This mean range order structure is typical of undercooled liquids which, in the undercooled state, have such a high viscosity to slow the molecular movements, preventing solidification from occurring solely due to the effect of the formation of crystals, structures characterized by a long range order, according to which the molecular groups are ordered in billions and billions of atoms. As a matter of fact, it is clear that in order to attain this level of order, all molecular groups need to have the possibility to move to arrange themselves in an orderly manner.

On the contrary, water may exist in the undercooled state, even for various tens of degrees below zero, but its viscosity still remains extremely low, hence, a further temperature drop causes the water to turn into ice, which has a crystalline structure.

Now, if a material is in glass phase this implies that, during the cooling process, to which it was subjected after melting, was not transformed into the crystalline phase due to the fact that the viscosity was too high and the cooling speed was too high.

The information outlined above highlights the first difficulty to be overcome in order to obtain material like that of the present invention. Crystals should not form too easily, otherwise glass does not remain glass, but it should devitrify during the cooling after melting.

According to the technology on which the present invention is based, the granules of the glass-ceramic material, possibly deposited on the ceramic tiles for coating the surface thereof, are initially entirely made up of glass, not containing any crystals therein.

The granules are thus intended to be subjected to a heat cycle such cycle being the same as that for baking tiles. Transformation occurs during this heat cycle: with the same baking times and at the same temperature required for sintering the mixture, the glass granules of the glass-ceramic material according to the present invention are capable of developing a crystallization during which crystals that acquire considerable dimensions are formed inside each granule. However, not the entire matrix undergoes the same transformation. As a matter of fact, a glass phase referred to as "residual glass phase" still remains between the crystals.

The role of this residual glass phase is essential, due to the fact that it facilitates the growth of crystals and serves as a bond for all crystals that have been formed. As a matter of fact, the composition of the initial glass, also contains many other accessory elements that shall not be part of the crystalline formations, but which play an important role, due to the fact that they are progressively concentrated in the residual glass phase, maintaining it fluid. Should the residual glass phase become more and more viscous during the crystal growth, such event would end up hindering the growth. Were the residual glass phase to become too fluid, it would cause dissolution thereof.

On the contrary, in the glass-ceramic material according to the present invention, the residual glass phase allows considerable growth of the crystals compatibly with the low times of the cycle for baking tiles, actually reaching a sufficiently low viscosity at temperatures compatible with the normal technologies for producing glazed porcelain tiles. The high percentage of devitrification of the glass-ceramic material of the present invention is thus such to guarantee a high resistance against abrasion and thus be conveniently used in the surface layer of ceramic pieces.

Furthermore, the residual glass phase of the glass-ceramic material of the present invention has the same refractive index as the crystalline phase, and this makes the crystallized glass granules perfectly transparent, conferring to the product an extremely high chromatic yield.

In addition, the residual glass phase of the glass-ceramic material of the present invention has the same density as the crystals formed, and this allows the crystals to be uniformly distributed in the volume of each granule making the surface of the granule considerably easy to clean, in that the crystals do not project from the surface (which is what would occur if the density of the crystals were lower than that of the glass phase), and they do not sink in the glass (which is what would occur were the crystals to have a higher density with respect to the glass phase).

Lastly, the residual glass phase of the glass-ceramic material of the present invention has a coefficient of dilation compatible both with that of the crystals formed and with a possible underlying ceramic support. This characteristic is important in that were the coefficients of dilation to be incompatible, there would arise residual tensions that could inevitably lead to a drop of resistance of the material, both in terms of resistance against abrasion and in terms of resistance against temperature.

Regarding the chemical composition of the glass-ceramic material according to the present invention, the precursor glass material of such glass-ceramic material is made up of SiO₂-Al₂O₃-M₂O-M'O-B₂O₃, wherein M may be selected from among Na, K, Li or a combination of these elements and M' may be selected from among Mg, Ca, Ba, Sr, Zn, Pb or a combination of these elements.

To implement the production process to obtain the product described, it has been used the composition of the precursor glass of the glass-ceramic material which is composed of the following weight percentage compositions: 35-70% of SiO₂, 10-30% of Al₂O₃, 0-15% of B₂O₃, the total of compounds Na₂O+K₂O+Li₂O being equal to at least 6% and the total of compounds MgO+CaO+BaO+SrO+ZnO+PbO being equal to at least 20%.

The composition of the precursor glass of the glass-ceramic material subject of the present invention is the following: SiO₂ comprised between 35 and 70%, Al₂O₃ comprised between 10 and 30%, B₂O₃ lower or equal to 15%, Na₂O+K₂O+Li₂O greater than 6% with K₂O lower or equal to 10%, Na₂O lower or equal to 10%, Li₂O lower or equal to 10%, SrO+CaO+MgO+BaO+ZnO+PbO greater than 20%, con SrO lower or equal to 25%, CaO lower or equal to 25%, MgO lower or equal to 25%, BaO lower or equal to 25%, ZnO lower or equal to 25% and PbO lower or equal to 25%.

The composition of the precursor glass of the glass-ceramic material subject of the present invention is such that, during a heat treatment of the kind usually required for baking the ceramic tiles, neoformation crystals - of which the main constituent is a silicoaluminate of general formula (Sr,Ca,Mg)Al₂Si₂O₈ which is crystallized in the monoclinic system - are separated from the glass phase.

Through simple experiments, the man skilled in the art may find alternative compositions bearing in mind the need to select the components so that the crystalline phase does not have a refractive index excessively differing from the index of the glass phase, so as not to excessively jeopardize the transparency of the coating.

It is also obvious to prevent the glass phase from having a coefficient of thermal dilation excessively differing from that of the crystalline phase hence avoid internal tensions during the baking cycle and cooling, or different specific weights so high to a point of causing too quick and general sinking or floating of the crystalline phase in the glass phase.

All these characteristics are attained by suitably selecting the ratios between the components M₂O (where M = Na, K, Li) and M'O (where M' = Mg, Ca, Ba, Sr, Zn, Pb) in such a manner to control the amount of residual glass phase, its density, refractive index and coefficient of dilation, and also the amount of the crystalline phase that is separated, its density, refractive index and coefficient of dilation as well as Mohs hardness.

The attached images were attained using the scanning electron microscope and they are an excellent representation of the description outlined above.

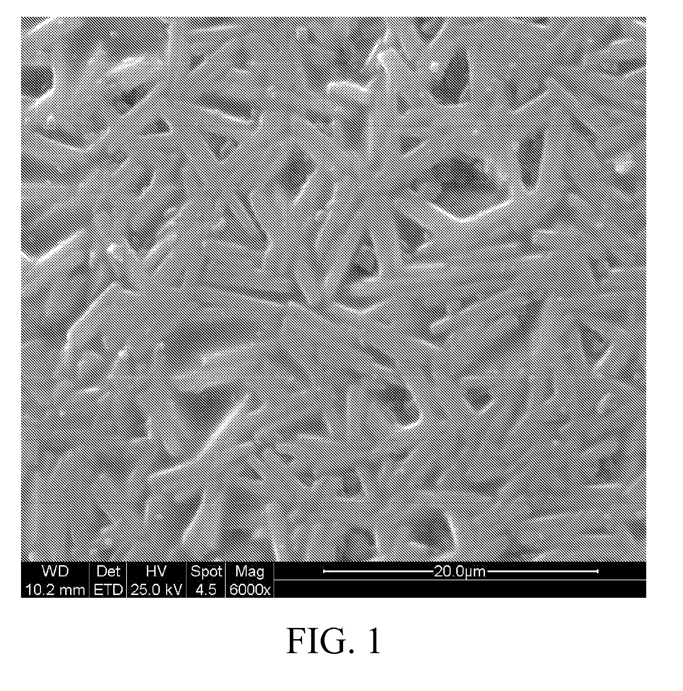

Figure 1 refers to the surface as it is. The surface appears as a dense network of elongated prismatic crystals. The spaces between the crystals are slightly sunken, but observing the enlargement scale one realizes that the roughness of the surface has sub-micrometric dimensions, hence they do not jeopardize the surface brightness and above all they do not jeopardize the easy cleaning characteristic thereof.

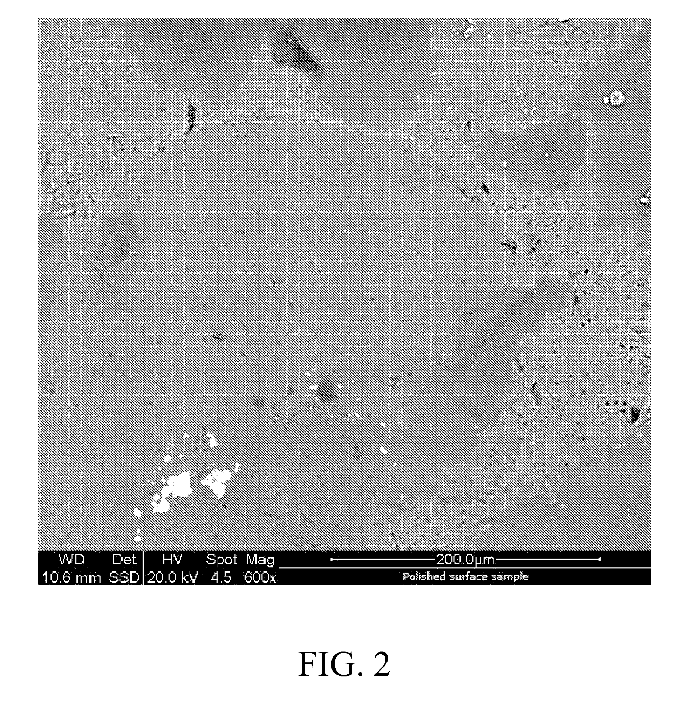

Figure 2 refers to the low magnification lapped surface. The polishing of the surface definitely highlights the dense crystallization which occurs in the volume of granules.

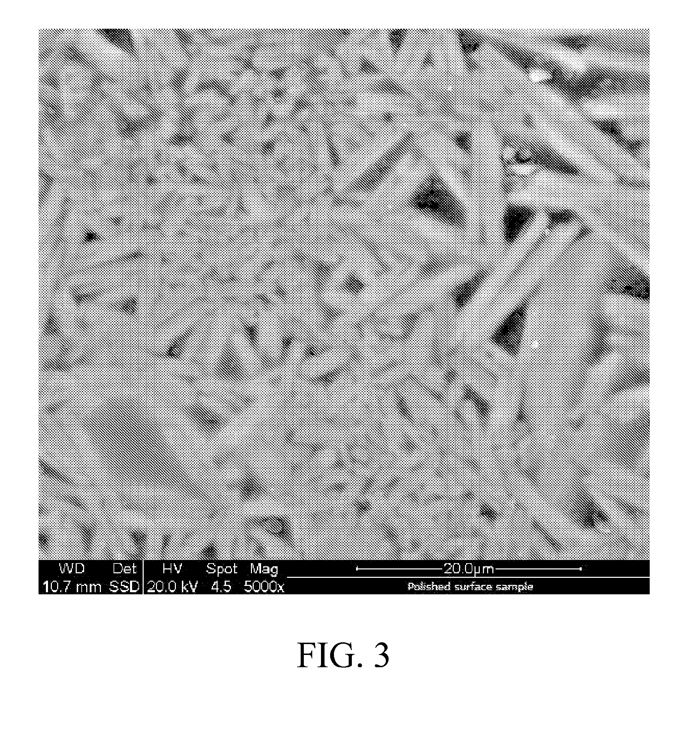

Figure 3 is an enlargement of the lapped zone, which highlights the fact that the ratio between the crystalline phase and residual glass phase definitely leans towards the crystalline phase. This fact allows defining this material, beyond any possible doubt, as glass-ceramic material, i.e. the percentage of crystalline phase is overabundant with respect to the residual glass phase.

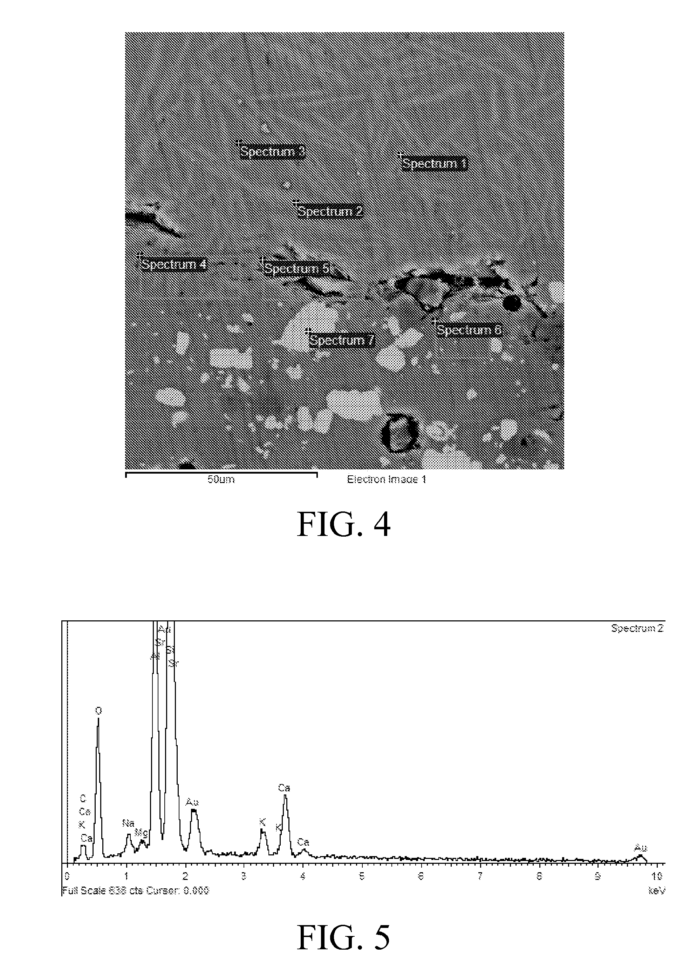

Figure 4 refers to the section of the surface layer of a ceramic tile coated with the glass-ceramic material of the invention, the surface layer appearing subdivided into two levels. The lower one is the colored glaze layer which confers the final color, while the upper one is the layer of densely crystallized granules. Due to the fact that the refractive index of the crystals is the same as that of the matrix, the crystallized layer is perfectly transparent. The color of the lower layer is further heightened by the transparency of the layer of devitrified granules (the effect is the same as that of wax on marble floor, or oil on wood furniture).

Figure 5 represents the EDAX spectrum which highlights the composition of the crystals. Such figure clearly shows that the composition mainly contains silicon, aluminum and strontium, hence it doubtlessly is a strontium silicoaluminate.

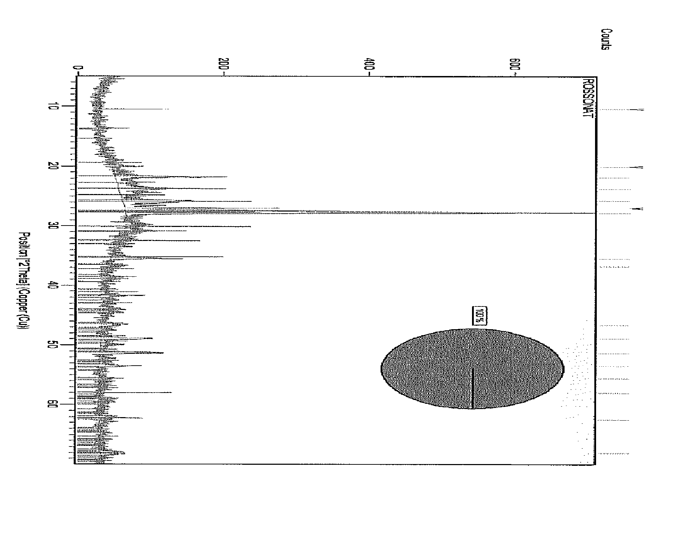

Figure 6 represents the X-ray diffraction spectrum obtained on the surface of the glass-ceramic material of the present invention. This analysis serves to identify the crystalline structure. The indented line represents the intensity of the diffraction recorded by the machine, while the vertical lines represent the position of the diffraction peaks regarding a strontium silicoaluminate according to bibliographical data. It can be clearly observed that most of the peaks match. The crystalline phase shown by the images obtained by means of the electron microscope may thus be identified without difficulties.

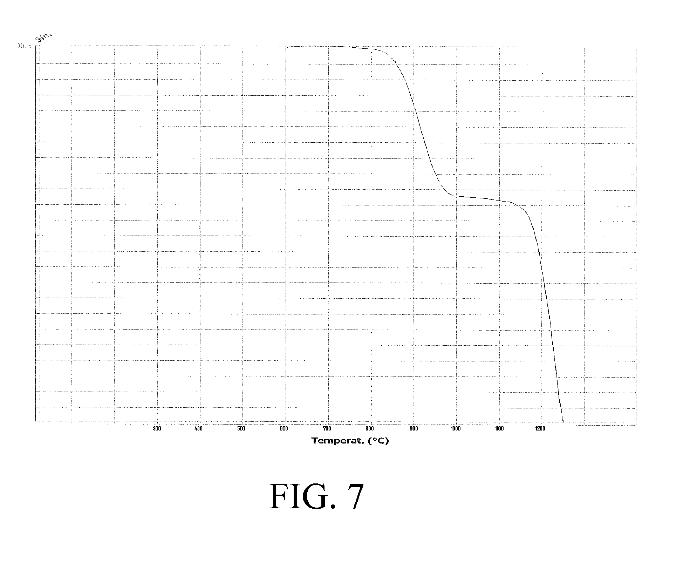

The graph of figure 7 represents the development of the sintering of a ground frit sample obtained from the glass-ceramic material of the present invention. The trend of the graph shows that this material starts forming a fluid glass phase which promotes sintering at around 800°C. Sintering is then blocked in the range between 980 and 1150°C. As a matter of fact, the graph has a horizontal plateau which implies that the test specimen did not vary dimension within a temperature range exceeding 150°C. This means that the material was subjected to structural transformation, i.e. the initial glass was transformed in a crystalline phase, exactly as shown both by the X-ray diffraction and by the micro-structural images.

The significant aspect highlighted by this analysis is that the temperature range within which the crystalline phase is formed and remains stable is perfectly compatible with the technology for producing tiles with the mixture entirely sintered (glazed).

Another important novelty is definitely the fact that the glass-ceramic material of the present invention can be used for producing tiles in a conventional roller kiln for the production of ceramic tiles.

In this description the technologies and material of which the support of the tile is made up were not identified in detail, same case applying to the fact that such support is provided with a first layer which represents the decoration thereof, given that current technologies may be employed, likewise to traditional baking cycle - comprising the temperatures - of the finished tile with the surface frit more specifically according to the present invention.

The possibility to use a traditional baking technology allows drastically reducing investments and considerably increasing production flexibility.

The main characteristics of the ceramic tiles obtained through the process according to the invention may be thus summarized:
- high resistance against abrasion for the tiles whose surface is coated with granules of glass-ceramic material;
- optimal resistance against slipping, due to the slightly rough but still shiny surface, characterized by granules with crystallized structure;
- extremely easy to clean, given the absence of deep cavities and unsmooth walls;
- the possibility to leave freedom of formation of the decoration underlying the tile, whose chromatic effect is improved by the brightness of the surface, unaltered though rough.

In particular, resistance against abrasion is obtained due to the fact that during baking, even in an industrial ceramic tiles production cycle, formed on the surface of the glass-ceramic material is a dense coating of neoformation crystals, densely interconnected to protect the surface. Even considering the same chemical composition, a crystalline phase is inherently more difficult to abrade with respect to a glass phase, given that the atoms are blocked in highly orderly arranged structures. The resistance against abrasion of the glass-ceramic material of the present invention, equivalent to a 5.5-6.5 Mohs hardness, is well above that of the glass or glaze matrix usually used for producing ceramic tiles, attaining values of the type obtained by glazing by means of the technique of the same applicant commercially known as "ENDURO".

The process according to the present invention may be implemented to obtain ceramic glazed tiles through the modern tiles technology by means of quick baking in roller kilns.

Furthermore, another fundamental characteristic of the invention, which combines with other characteristics to guarantee high resistance against abrasion even in cases where the surface layer has been removed, lies in that the crystallization which occurs during the baking cycle is spread over the entire thickness of the material and not only on its surface.

It will be detailed hereinafter an example of application of method described to manufacture a glazed porcelain stone tile with surface coated in ceramic glass frit granules with a strontium silicoaluminate base.

Starting with powder atomized with a suitable paste for porcelain stone, the tiles are pressed using a specific pressure of 400 Kg per meter squared. These tiles, after being appropriately dried, are covered with an appropriate slip coating, according to the known single firing glazing technique. A coating glaze is applied above the slip layer with the following chemical composition, indicated here without color pigments:

| | |
|---|---|
| SiO₂ | 56,4 |
| Al₂O₃ | 20,6 |
| Fe₂O₃ | 0,26 |
| TiO₂ | 0,17 |
| CaO | 7,6 |
| MgO | 3,0 |
| K₂O | 3,00 |
| Na₂O | 5,47 |
| ZnO | 1,2 |

This glaze can be colored as wished with ceramic pigments according to the known technique and is applied in a water suspension state, with a percentage of water at 45%, in the quantity of 400 grams per meter squared.

Immediately after drying this glaze layer, a diluted solution of carboxymethyl cellulose is applied, according to the known technique, with the function of gluing the subsequent application of granules of ceramic glass frit.

Immediately after applying the glue, an even layer of ceramic glass frit granules in the ratio of 800 grams per meter squared is applied.

The ceramic glass frit will have the following chemical composition in a glass state.

| | |
|---|---|
| P.C. | 0,0 |
| SiO₂ | 55,2 |
| Al₂O₃ | 17,7 |
| Fe₂O₃ | 0,13 |
| TiO₂ | 0,07 |
| CaO | 7,4 |
| MgO | 2,8 |
| K₂O | 3,72 |
| Na₂O | 2,01 |
| ZrO₂ | 0,1 |
| ZnO | 1,6 |
| B₂O₃ | 2,6 |
| SrO | 6,2 |

This frit will be appropriately dry ground, according to the known technique and dried in such a way to obtain a granule metric distribution between 250 and 500 micron.

The tile obtained as such, after a further drying phase, according to the known technique, is ready to undergo an appropriate single firing treatment, according to the known technique.

In particular, the thermal treatment must be maintained at a maximum temperature of 1210°C for a total of 10 minutes and the total thermal cycle, including cooling, for a total duration of 60 minutes, according to the known fast firing technique in roller ovens.

Once the thermal treatment is complete, the surface of the tile will be slightly rough, but with bright colors, based on the coloring on the base glaze.

The surface of the tile manifests all mechanical and abrasive properties obtained by devetrification of the ceramic glass frit.

The present invention has been described for exemplifying but non-limiting purposes according to the preferred embodiments thereof, but it may be subjected - by a man skilled in the art - to variations and/or modifications without departing from the respective scope of protection, as defined by the attached claims.

## Claims

1. Process for manufacturing rough-surface ceramic tiles, wherein a ceramic material support undergoes oven baking, a first decorative layer affixed to such support along with a second surface layer composed of precursor glass material made up of SiO₂-Al₂O₃-M₂O-M'O-B₂O₃, wherein M may be chosen from among Na, K, Li or a combination of these elements and M' may be chosen from among Mg, Ca, Ba, Sr, Zn, Pb or a combination of these elements, during said baking occurring both the sintering of the ceramic mixture and the formation from said precursor glass material of a glass-ceramic material comprising neoformation crystals of which the main constituent is a silicoaluminate of general formula (M') Al₂Si₂O₈.

2. Process according to claim 1, **characterized in that** said precursor glass material is composed of the following weight percentage compositions: 35-70% SiO₂, 10-30% Al₂O₃, 0-15% B₂O₃, the total of compounds Na₂O+K₂O+Li₂O being equal to at least 6% and the total of compounds MgO+CaO+BaO+SrO+ZnO+PbO being equal to at least 20%.

3. Process according to claim 2, **characterized in that** said precursor glass material is made up of the following weight percentage compositions: SiO₂ comprised between 35 and 70%, Al₂O₃ comprised between 10 and 30%, B₂O₃ less than or equal to 15%, Na₂O+K₂O+Li₂O greater than 6% with K₂O smaller than or equal to 10%, Na₂O smaller than or equal to 10%, Li₂O less than or equal to 10%, SrO+CaO+MgO+BaO+ZnO+PbO greater than 20%, with SrO less than or equal to 25%, CaO less than or equal to 25%, MgO less than or equal to 25%, BaO less than or equal to 25%, ZnO less than or equal to 25% and PbO less than or equal to 25%.

4. Process according to claim 2 or 3, wherein said precursor glass material forms, during said baking, a glass-ceramic material comprising neoformation crystals of which the main constituent is a strontium silicoaluminate of general formula (Sr, Ca, Mg)Al₂Si₂O₈.

5. Process according to claim 4, wherein said neoformation crystals form in a temperature range between 980°C and 1150°C.

6. Process according to one or more of the preceding claims, wherein said precursor glass material is deposited on said first decorative layer in the form of granules.

7. Glass-ceramic material for the formation of a ceramic tile surface coating layer comprising neoformation crystals of which the main constituent is a silicoaluminate of general formula (M')Al₂Si₂O₈ and obtainable by means of a baking process compatible with that known for the production of ceramic tiles from a precursor glass material composed of SiO₂-Al₂O₃-M₂O-M'O-B₂O₃, wherein M may be chosen from among Na, K, Li or a combination of these elements and M' may be chosen from among Mg, Ca, Ba, Sr, Zn, Pb or a combination of these elements.

8. Glass-ceramic material according to claim 7, wherein the main constituent of said neoformation crystals is a strontium silicoaluminate of general formula (Sr, Ca, Mg)Al₂Si₂O₈ and obtainable by means of a baking process compatible with that known for the production of ceramic tiles from a precursor glass material of the following weight percentage compositions: SiO₂ comprised between 35 and 70%, Al₂O₃ comprised between 10 and 30%, B₂O₃ less than or equal to 15%, Na₂O+K₂O+Li₂O greater than 6% with K₂O smaller than or equal to 10%, Na₂O smaller than or equal to 10%, Li₂O less than or equal to 10%, SrO+CaO+MgO+BaO+ZnO+PbO greater than 20%, with SrO less than or equal to 25%, CaO less than or equal to 25%, MgO less than or equal to 25%, BaO less than or equal to 25%, ZnO less than or equal to 25% and PbO less than or equal to 25%.

9. Ceramic tile obtained with the process according to claim 1.

10. Ceramic tile endowed with surface coating composed of glass-ceramic material according to claim 7.
